# EUROPEAN PATENT SPECIFICATION

(11) **EP 2 685 567 B1**
(45) Date of publication and mention of the grant of the patent: **04.03.2015**
(21) Application number: 12397521.1
(22) Date of filing: 13.07.2012
(51) Int. Cl.: H01R 13/443, H01R 13/639, H01R 24/52, H04H 20/78, H01R 27/00, H04N 7/10

(54) **Attachment arrangement for a CATV module**
Befestigungsanordnung für CATV-Modul
Agencement de fixation pour module de CATV

(43) Date of publication of application: 15.01.2014
(73) Proprietor: Teleste Oyj, 20660 Littoinen (FI)
(72) Inventor: Welter, Samuel David, 4052 Beaufays (Chaudfontaine) (BE)
(74) Representative: Tampereen Patenttitoimisto Oy

(56) References cited:
- EP-A2- 1 755 198
- GB-A- 2 376 136
- US-A1- 2005 247 707
- US-A1- 2011 070 772
- US-B1- 8 212 146

## Description

### Field of the invention

The invention relates to an arrangement for attaching a CATV module to a wall outlet of a cable television network.

### Background of the invention

Various kinds of CATV (Common Antenna Television or Cable Television) modules are used for distributing an output signal from a CATV wall outlet to one or more receiving equipment, for example at home. A CATV module typically comprises an input port for connecting the CATV module to a connector of the wall outlet so as to receive an RF signal (e.g. television, data and/or radio) from the CATV network, and at least one, but typically a plurality (e.g. 2 - 8) of output ports for distributing the RF signal to the plurality of receiving equipment. For dividing the RF signal suitably for the output ports, the CATV module typically comprises various kinds of filter and/or splitter circuitry. The RF signal may comprise one or more television signals, data signals and/or radio signals modulated on their own frequency band, and the task of CATV module is to filter and/or split the each of the signals to the respective output port.

For ensuring a proper operation of the CATV module, it is important that the input port of the CATV module is connected firmly with the connector of the wall outlet. The CATV modules are typically held in place on the outlets by the friction of the connection between the module and the wall outlet. It is also known to attach modules to outlets by means of screws to ensure a firm connection.

EP 1755198 discloses a locking mechanism for a filter and/or splitter module, where the module is attached to a wall outlet by introducing an electrical terminal of the module to a terminal on the wall outlet and using this connection of terminals as a centre of rotation, a projection extending from the module is rotated into a slot in the wall outlet to lock the module to the wall outlet.

However, such a mechanism requires a specifically designed front side of the wall outlet, having the slot corresponding to the projection of the module. Therefore, it does not suffice to have the module re-designed, but also the front side of the wall outlets needs to be changed to the corresponding design. Moreover, in most CATV wall outlets, there are typically at least two IEC 169-2 standard connectors, and the design of EP 1755198 cannot be used therein without significant changes in the front side of the wall outlet.

A further problem with connecting the CATV module firmly with the connector of the wall outlet is that there are various types of wall outlets used in different countries, wherein different distances between the at least two connectors may be used. Thus, a CATV module connectable firmly with a wall outlet according to a first type does not fit to a wall outlet according to a second type.

### Brief summary of the invention

Now, an improved arrangement has been developed to reduce the above-mentioned problems. As aspects of the invention, we present an adapter plate for attaching a CATV module, which is characterized in what will be presented in the independent claim.

The dependent claims disclose advantageous embodiments of the invention.

According to the invention, there is provided an adapter plate for attaching a CATV module to a wall outlet terminating a coaxial cable, the wall outlet comprising a first and a second RF connector; the adapter plate comprising a plug substantially orthogonal to a surface of the plate, the plug being designed to fit into the first RF connector of a first type of wall outlet; and a hole for insertion of a RF connector of the CATV module, the hole locating at a distance from the plug such that when the plug is inserted into said first RF connector, the hole is co-locatable with the second RF connector of the first type of wall outlet.

According to an embodiment, the plug comprises a first longitudinal surface designed to fit into a recess between a pin and a circular wall of the first connector.

According to an embodiment, the plug comprises a second longitudinal surface opposite to the first longitudinal surface being designed as reversed to the first longitudinal surface such that when arranged on the opposite side of a pin of a first RF connector of a second type of wall outlet, the hole is co-locatable with a second RF connector of the second type of wall outlet.

According to an embodiment, the first and second longitudinal surfaces have convex-shaped upper and lower cross-sections, the convex-shaped upper and lower cross-sections of either the first or the second longitudinal surface arranged to be in contact with the circular wall of the first connector.

According to an embodiment, the first and second longitudinal surfaces have a concave-shaped middle cross-section.

According to an embodiment, the first and the second RF connectors are Belling-Lee connectors (IEC 169-2), wherein the first RF connector is intended for FM radio signal and the second connector is intended at least for television signal.

According to an embodiment, in the first type of wall outlet, a distance between pins of the first and second RF connector is substantially 25 mm, more preferably 25,4 mm; and in the second type of wall outlet, a distance between pins of the first and second RF connector is substantially 30 mm, more preferably 30,0 mm.

According to an embodiment, the adapter plate comprises means for connecting the adapter plate to the CATV module.

According to an aspect of the invention, there is provided a CATV module suitable for attaching to a wall outlet terminating a coaxial cable, which CATV module comprises an adapter plate according to any of above embodiments.

According to an embodiment, the adapter plate is attached to the CATV module as a back plate.

According to an embodiment, the CATV module is a filter and/or splitter module, a cable modem, an amplifier or an Ethernet-over-coax equipment.

The other aspects, embodiments and advantages will be presented later in the detailed description of the invention.

### Brief description of the drawings

The invention will now be described in more detail in connection with preferred embodiments with reference to the appended drawings, in which:
Fig. 1 shows a typical wall outlet having two RF connectors;
Fig. 2 shows an adapter plate according to an embodiment to be used together with a CATV module;
Figs. 3a and 3b show insertion of a plug of the adapter plate to a first type of wall outlet according to an embodiment;
Figs. 4a and 4b show insertion of a plug of the adapter plate to a second type of wall outlet according to another embodiment;
Figs. 5a and 5b show two exemplary embodiments for shapes of the longitudinal surfaces of the plug; and
Fig. 6 shows shapes and dimensions of the plug according to an embodiment.

### Detailed description of the embodiments

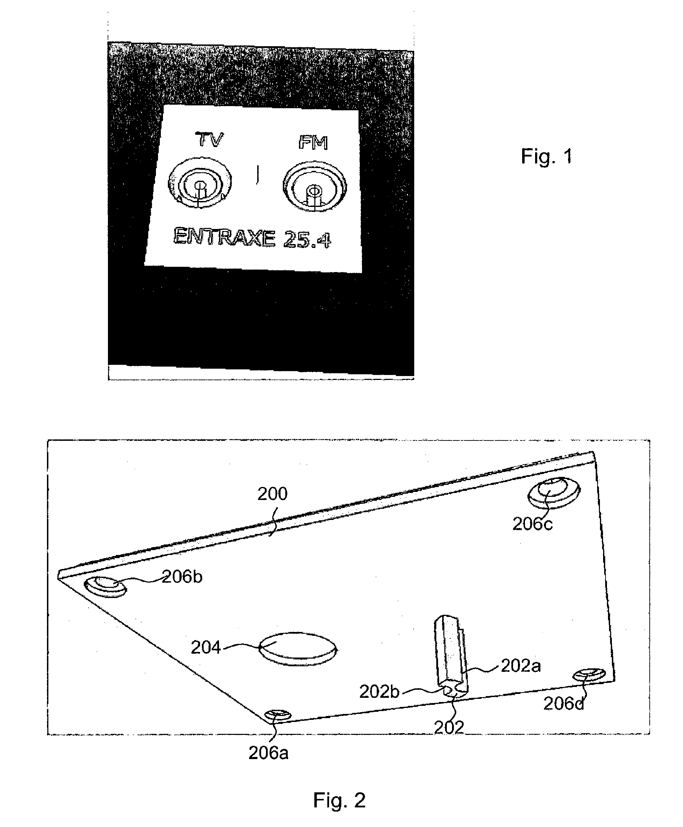

Figure 1 shows a typical wall outlet having a first connector for FM radio signal implemented as a female-type IEC 169-2 connector and a second connector for TV signal implemented as a male-type IEC 169-2 connector. However, in contemporary cable TV networks the connector for FM radio signal is typically not used anymore, and only the connector of the TV signal is in use.

Even though the connectors are standardized to ensure interconnection between the cable TV network and the receiving equipment, the distance between the connectors is not regulated by a standard. Thus, there are various types of wall outlets used in different countries, wherein the distance between the connectors may be different between the wall outlet types. For example, in a certain type of wall outlet the distance between the signal pins of the TV and FM connectors is 25,4 mm, whereas in other type of wall outlet it is 30,0 mm.

For attaching a CATV module to a first type of wall outlet firmly, an adapter plate to be used together with the CATV module is introduced in Figure 2. The idea underlying the adapter plate derives from the fact that FM radio signal connector is not used anymore; thus, the adapter plate 200 comprises a plug 202 protruding substantially orthogonally from the surface of the adapter plate, the plug being designed to fit into the first connector, i.e. the FM radio signal connector. The adapter plate further comprises a hole 204 through which a TV signal connector of the CATV module (not shown) may be connected to the corresponding connector of the wall outlet. The hole 204 is located in the adapter plate 200 at a distance from the plug such that when the plug is inserted into the first connector of the wall outlet, the hole can be co-located with the second connector; i.e. the TV signal connector of the wall outlet. Thereby, the TV signal connector of the CATV module can be simply pushed to the TV signal connector of the wall outlet.

Thus, a CATV module can be connected/disconnected to/from the network by a simple push/pull movement without any tools and without any modifications in the wall outlet; i.e. conventional wall outlets with standardized connectors may be used as such. The plug inserted into the FM radio signal connector provides strong mechanical contact for keeping the CATV module firmly attached with the wall outlet. Moreover, since the CATV module is supported by both the FM radio signal connector and the TV signal connector of the wall outlet, the CATV module is inevitably assembled in horizontal position, which makes it easy for a user to connect. Furthermore, since the FM radio signal connector is no longer in use in CATV networks, the plug does not have to capable of transferring electrical signals, but a mere dummy plug can be used.

In many countries, the RF connectors used in wall outlets as shown in Figure 1 are so-called Belling-Lee connectors (a.k.a. TV aerial plug or PAL connector), which is more precisely specified in the standard IEC 169-2. In such a RF connector, but also in many other types of RF connectors, there is a recess between a pin and a circular wall of the RF connector.

According to an embodiment, since the plug does not have to capable of transferring electrical signals, the plug 202 comprises a first longitudinal surface 202a designed to fit into the recess between the pin and the circular wall of the first connector. The wall around the recess provides improved mechanical contact and friction for keeping the plug firmly in its position.

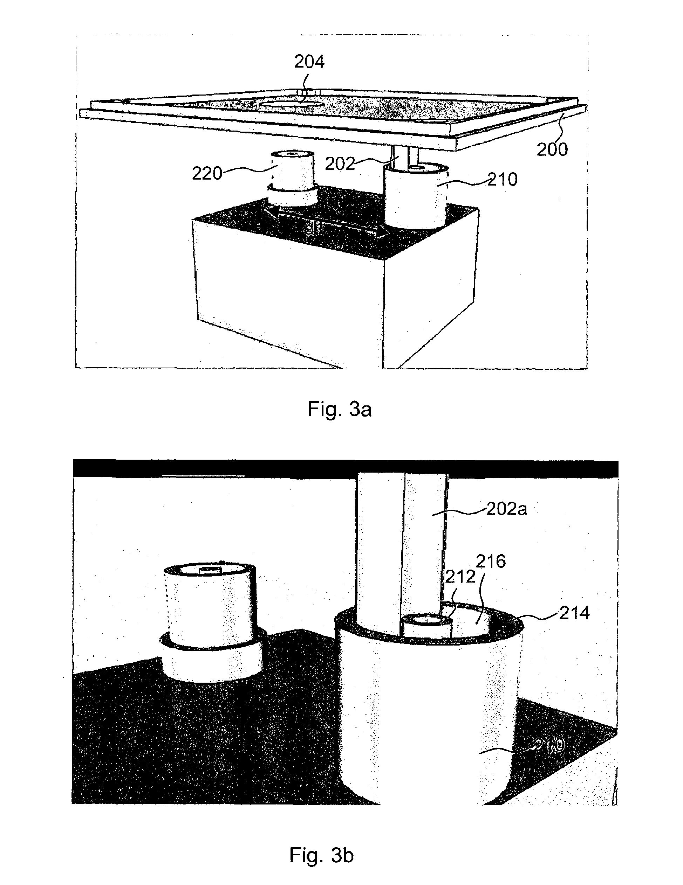

This is further illustrated in Figures 3a and 3b, where the plug 202 of the adapter plate 200 is inserted into the FM radio signal connector 210 such that the hole 204 of the adapter plate and the TV signal connector 220 are co-located. The distance between the pins of the first 210 and second 220 RF connectors is denoted by d1. As can be seen in figure 3b, between the female pin 212 and the circular wall 214 of the FM radio signal connector 210, there is a recess 216. The first longitudinal surface 202a of the plug is designed such that it fits firmly into the recess 216.

According to an embodiment, the plug 202 comprises a second longitudinal surface 202b opposite to the first longitudinal surface 202a being designed as reversed to the first longitudinal surface such that when arranged on the opposite side of a pin of a first RF connector of a second type of wall outlet, the hole 204 is co-locatable with a second RF connector of the second type of wall outlet. Thus, by appropriately designing the plug, the CATV module can be used in different types of wall outlets. Nevertheless, the same simple push/pull movement is used to connect/disconnect the module, and the plug again ensures the CATV module to be assembled in horizontal position, which is a natural user experience for the user.

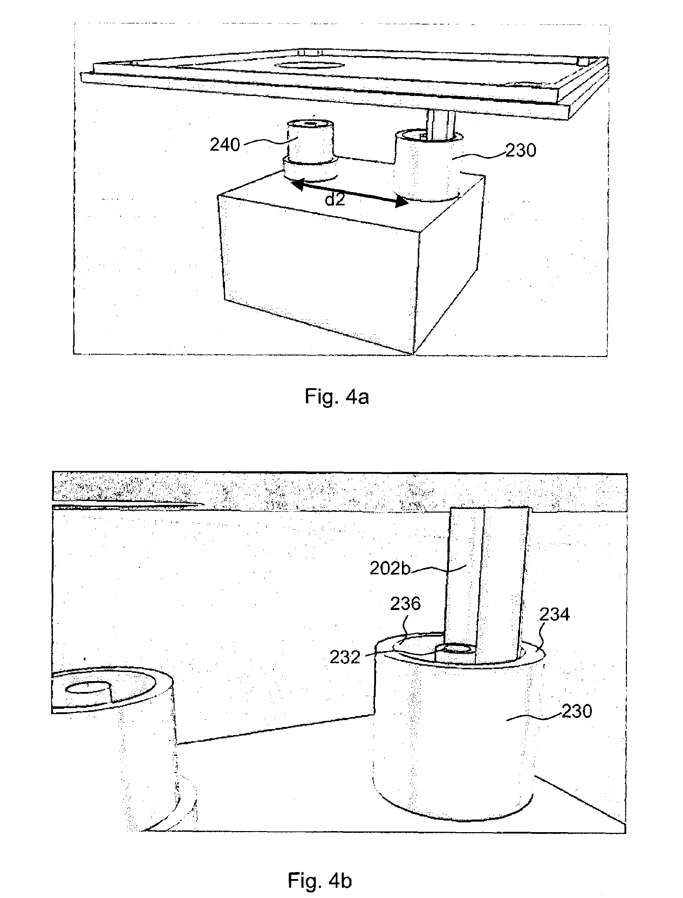

This is further illustrated in Figures 4a and 4b, where a second type of wall outlet is used, where the distance between the first 230 and the second 240 connector (i.e. the FM radio signal connector and the TV signal connector) is different from the first type of wall outlet of Figures 3a and 3b. The distance between the pins of the first 230 and second 240 RF connectors is denoted by d2 (≠d1). Now the plug 202 of the adapter plate 200 is inserted into the FM radio signal connector 230 on the opposite side of the pin, compared to the case of the first type of wall outlet, such that the hole 204 of the adapter plate and the TV signal connector 240 are co-located. As can be seen in figure 4b, the second longitudinal surface 202b of the plug is designed such that it fits firmly into the recess 236 of the FM radio signal connector 230.

There are various possibilities to design the shapes of longitudinal surfaces of the plug. However, if the adapter plate is desired to be used with at least two types of wall outlet having different distances between the RF connectors, then the difference in the distance between the RF connectors may have effect on the shapes of longitudinal surfaces of the plug.

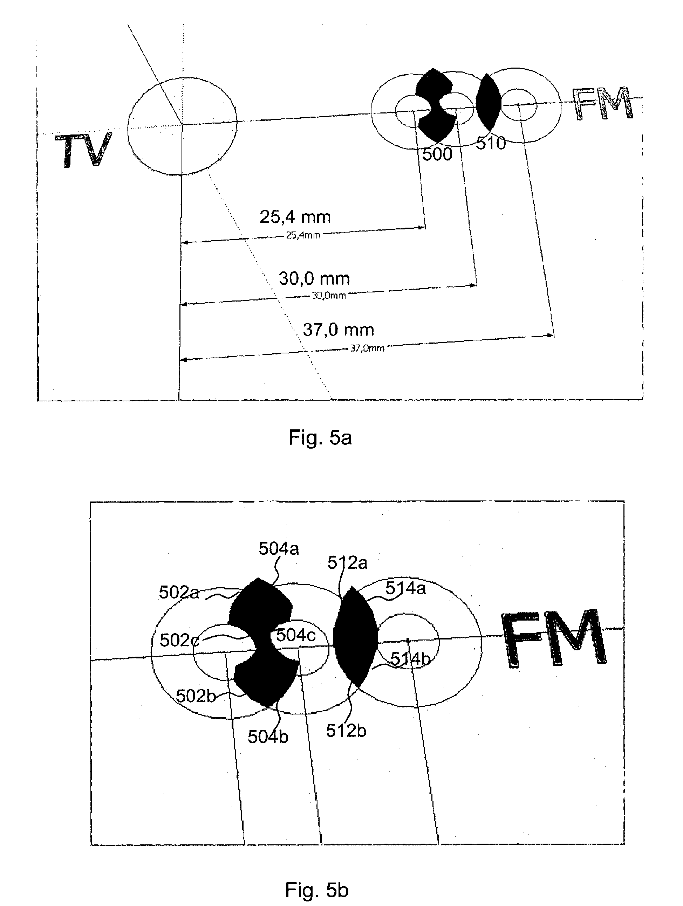

Figures 5a and 5b show two possible shapes for the longitudinal surfaces of the plug. The first shape 500 is intended to be used for two types of wall outlet, in the first type of wall outlet, the distance between the pins of the first and second RF connector is substantially 25,4 mm, and in the second type of wall outlet, the distance between the pins of the first and second RF connector is substantially 30,0 mm. Since the difference in the distance between the RF connectors is only 4,6 mm, the space required by the pins of the connectors has to be taken into consideration when designing the middle of the cross-section of the plug to remove any overlap.

The second shape 510 is intended to be used for two types of wall outlet, in the first type of wall outlet, the distance between the pins of the first and second RF connector is substantially 30,0 mm, and in the second type of wall outlet, the distance between the pins of the first and second RF connector is substantially 37,0 mm. Since the difference in the distance between the RF connectors is now 7,0 mm, the plug no longer overlaps the pins of the connectors, and the cross-section shape 510 can be used for the plug.

What is common to both of the shapes 500, 510 is that the first and second longitudinal surfaces have convex-shaped upper and lower cross-sections, the convex-shaped upper and lower cross-sections of either the first or the second longitudinal surface being arranged to be in contact with the circular wall of the first connector.

As shown in Figure 5b as a partial magnification of Figure 5a, the first longitudinal surface of the shape 500 has a convex-shaped upper cross-section 502a and a convex-shaped lower cross-section 502b. The second longitudinal surface of the shape 500 has a convex-shaped upper cross-section 504a and a convex-shaped lower cross-section 504b. Similarly, the first longitudinal surface of the shape 510 has a convex-shaped upper cross-section 512a and a convex-shaped lower cross-section 512b. The second longitudinal surface of the shape 510 has a convex-shaped upper cross-section 514a and a convex-shaped lower cross-section 514b.

These convex-shaped upper and lower cross-sections play significant role in attaching the plug firmly with the connector, since they provide the mechanical contact and friction between the plug and the connector. As can be seen in Figure 5, depending on which side of the pin the plug is attached, the convex-shaped upper and lower cross-sections of either the first or the second longitudinal surface is always arranged to be in contact with the circular wall of the first connector.

According to an embodiment, the first and second longitudinal surfaces further have a concave-shaped middle cross-section. This is the case for the first shape 500 in Figure 5, where the difference in the distance between the RF connectors of the two types of wall outlets is so small, that in order to avoid the plug from overlapping the pins of the RF connectors, a concave-shaped middle cross-section 502c, 504c has been arranged on both longitudinal surfaces of the plug.

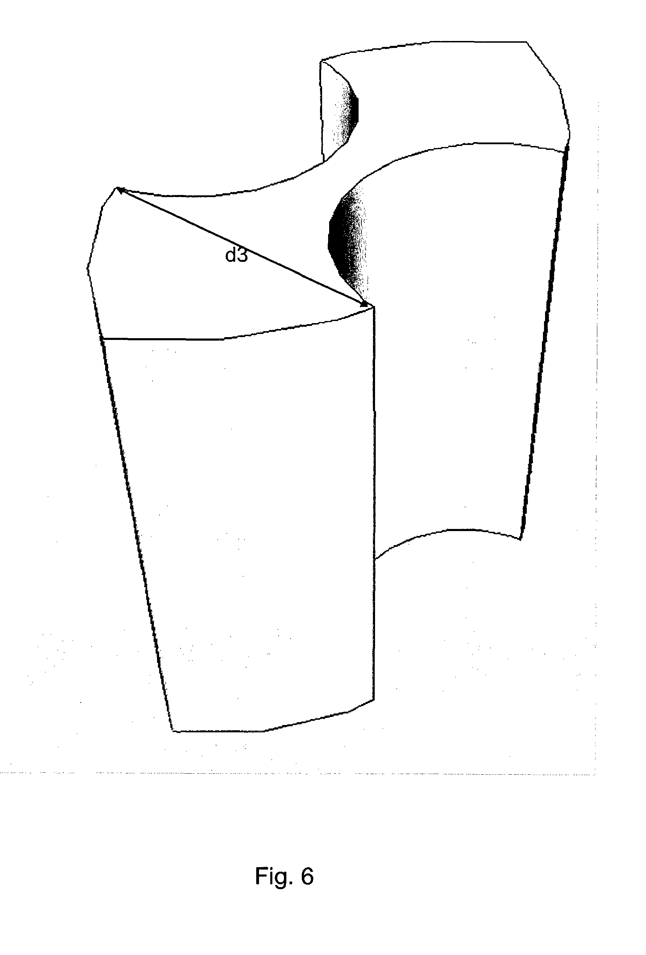

The plug of the above shape 500 is illustrated further in detail in Figure 6. The exact shapes and dimensions of the plug depend on the type of the RF connectors used in the wall outlet and on the difference in the distance between the RF connectors of the two types of wall outlets. For example, the radius of curvature of the convex-shaped upper and lower cross-sections is determined according to the radius of curvature of the circular wall of the RF connector. The maximum value for cross-sectionally widest dimension d3 of the plug is determined on the basis of the difference in the distance between the RF connectors of the two types of wall outlets. The material of the plug is not relevant, as such, for the operation of the embodiments, but it may be, for example, zamak, an alloy of zinc and aluminium, which is preferable to use due to its good castability and long term dimensional stability.

The adapter plate is attachable to a CATV module, for which purpose the adapter plate may, according to an embodiment, comprise means for connecting the adapter plate to the module. Referring back to Figure 2, the adapter plate 200 may comprise screw holes 206a, 206b, 206c, 206d for attaching the adapter plate to a CATV module. Also the material of the adapter plate is not relevant, as such, for the operation of the embodiments, but it may be, for example, zamak, sheet metal, brass or plastic.

According to an embodiment, the adapter plate may be arranged to form a back plate (back wall) of the casing of the CATV module.

The CATV module may be a filter and/or splitter module described above. Alternatively or in addition, the CATV module may be a cable modem, an amplifier, an Ethernet-over-coax equipment, or any other communication equipment connectable to a wall outlet terminating a coaxial cable.

It will be obvious for a person skilled in the art that with technological developments, the basic idea of the invention can be implemented in a variety of ways. Thus, the invention and its embodiments are not limited to the above-described examples but they may vary within the scope of the claims.

## Claims

1. An adapter plate (200) for attaching a CATV module to a wall outlet terminating a coaxial cable, the wall outlet comprising a first and a second RF connector; wherein the adapter plate comprises
a plug (202) substantially orthogonal to a surface of the plate,
a hole (204) for insertion of a RF connector of the CATV module, **characterized in that**
the plug is designed to fit into the first RF connector (210, 230) of a first type of wall outlet; and
the hole (204) of the adapter plate locates at a distance from the plug (202) such that when the plug is inserted into said first RF connector (210, 230), the hole (204) is co-locatable with the second RF connector (220, 240) of the first type of wall outlet.

2. The adapter plate according to claim 1, **characterized in that**
the plug comprises a first longitudinal surface (202a) designed to fit into a recess (216) between a pin (212) and a circular wall (214) of the first connector.

3. The adapter plate according to claim 2, **characterized in that**
the plug comprises a second longitudinal surface (202b) opposite to the first longitudinal surface (202a) being designed as reversed to the first longitudinal surface such that when arranged on the opposite side of a pin of a first RF connector of a second type of wall outlet, the hole is co-locatable with a second RF connector of the second type of wall outlet.

4. The adapter plate according to claim 3, **characterized in that**
the first and second longitudinal surfaces have convex-shaped upper and lower cross-sections (502a, 502b; 504a, 504b), the convex-shaped upper and lower cross-sections of either the first or the second longitudinal surface arranged to be in contact with the circular wall of the first connector.

5. The adapter plate according to claim 4, **characterized in that**
the first and second longitudinal surfaces have a concave-shaped middle cross-section (502c; 504c).

6. The adapter plate according to any of preceding claims, **characterized in that**
the first and the second RF connectors are Belling-Lee connectors (IEC 169-2), wherein the first RF connector is intended for FM radio signal and the second connector is intended at least for television signal.

7. The adapter plate according to any of claims 3 - 6, **characterized in that**
in the first type of wall outlet, a distance between pins of the first and second RF connector is substantially 25 mm, more preferably 25,4 mm; and
in the second type of wall outlet, a distance between pins of the first and second RF connector is substantially 30 mm, more preferably 30,0 mm.

8. The adapter plate according to any of preceding claims, **characterized in that** the adapter plate comprises
means for connecting the adapter plate to the CATV module.

9. A CATV module suitable for attaching to a wall outlet terminating a coaxial cable, **characterized in that**
the CATV module comprises an adapter plate according to any of claims 1 - 8.

10. The CATV module according to claim 9, **characterized in that**
the adapter plate is attached to the CATV module as a back plate.

11. The CATV module according to claim 9 or 10, **characterized in that**
the CATV module is a filter and/or splitter module, a cable modem, an amplifier or an Ethernet-over-coax equipment.

## Patentansprüche

1. Adapterplatte (200) zum Befestigen eines CATV-Moduls an einer Wandsteckdose, die einen Abschluss für ein Koaxialkabel bildet, wobei die Wandsteckdose eine erste und eine zweite RF-Steckverbindung aufweist; wobei die Adapterplatte folgendes aufweist:
einen Stecker (202), der im Wesentlichen orthogonal zu einer Oberfläche der Platte ist,
ein Loch (204) für das Einführen einer RF-Steckverbindung des CATV-Moduls, **dadurch gekennzeichnet, dass**
der Stecker so gestaltet ist, dass er in die erste RF-Steckverbindung (210, 230) einer ersten Bauart der Wandsteckdose passt; und
das Loch (204) der Adapterplatte sich in einem Abstand zum Stecker (202) befindet, so dass, wenn der Stecker in die erste RF-Steckverbindung (210, 230) eingeführt wird, das Loch (204) mit der zweiten RF-Steckverbindung (220, 240) der ersten Bauart der Wandsteckdose in räumliche Übereinstimmung gebracht werden kann.

2. Adapterplatte gemäß Anspruch 1, **dadurch gekennzeichnet, dass**
der Stecker eine erste Längsfläche (202a) aufweist, die so ausgebildet ist, dass sie in eine Ausnehmung (216) zwischen einem Zapfen (212) und einer runden Wand (214) der ersten Steckverbindung passt.

3. Adapterplatte gemäß Anspruch 2, **dadurch gekennzeichnet, dass**
der Stecker eine zweite Längsfläche (202b) aufweist, die entgegengesetzt zur ersten Längsfläche (202a) seitenverkehrt zur ersten Längsfläche ausgebildet ist, so dass, wenn sie auf der entgegengesetzten Seite eines Zapfens einer ersten RF-Steckverbindung einer zweiten Bauart der Wandsteckdose angeordnet ist, das Loch mit einer zweiten RF-Steckverbindung der zweiten Bauart der Wandsteckdose in räumliche Übereinstimmung gebracht werden kann.

4. Adapterplatte gemäß Anspruch 3, **dadurch gekennzeichnet, dass**
die erste und die zweite Längsfläche konvexförmige obere und untere Querschnitte (502a, 502b; 504a, 504b) aufweisen, wobei die konvexförmigen oberen und unteren Querschnitte jeweils der ersten oder der zweiten Längsfläche in Kontakt mit der runden Wand der ersten Steckverbindung angeordnet sind.

5. Adapterplatte gemäß Anspruch 4, **dadurch gekennzeichnet, dass**
die erste und zweite Längsfläche einen konkavförmigen mittleren Querschnitt (502c; 504c) aufweisen.

6. Adapterplatte gemäß einem der vorhergehenden Ansprüche, **dadurch gekennzeichnet, dass**
die erste und die zweite RF-Steckverbindung Belling-Lee-Steckverbinder (IEC 169-2) sind, wobei die erste RF-Steckverbindung für UKW-Rundfunksignale und die zweite Steckverbindung mindestens für ein Fernsehsignal gedacht ist.

7. Adapterplatte gemäß einem der Ansprüche 3 - 6, **dadurch gekennzeichnet, dass**
bei der ersten Bauart der Wandsteckdose ein Abstand zwischen Zapfen der ersten und der zweiten RF-Steckverbindung im Wesentlichen bei 25 mm, bevorzugter bei 25,4 mm liegt; und
bei der zweiten Bauart der Wandsteckdose ein Abstand zwischen Zapfen der ersten und der zweiten RF-Steckverbindung im Wesentlichen bei 30 mm, bevorzugter bei 30,0 mm liegt.

8. Adapterplatte gemäß einem der vorhergehenden Ansprüche, **dadurch gekennzeichnet, dass** die Adapterplatte
Mittel zum Verbinden der Adapterplatte mit dem CATV-Modul aufweist.

9. CATV-Modul, das zum Befestigen an einer Wandsteckdose, die einen Abschluss für ein Koaxialkabel bildet, geeignet ist, **dadurch gekennzeichnet, dass**
das CATV-Modul eine Adapterplatte gemäß einem der Anspräche 1 - 8 aufweist.

10. CATV-Modul gemäß Anspruch 9, **dadurch gekennzeichnet, dass**
die Adapterplatte an dem CATV-Modul als eine Rückplatte befestigt ist.

11. CATV-Modul gemäß Anspruch 9 oder 10, **dadurch gekennzeichnet, dass**
das CATV-Modul ein Filter- und/oder Splittermodul, ein Kabelmodem, ein Verstärker oder ein Ethernet-over-Coax-Gerät ist.

## Revendications

1. Plaque d'adaptation (200) pour fixer un module CATV à une terminaison de prise de courant d'un câble coaxial, la prise de courant comprenant un premier et un second connecteur RF; la plaque d'adaptation comprenant :
une fiche (202) sensiblement orthogonale à une surface de la plaque,
un trou (204) pour l'insertion d'un connecteur RF du module CATV, **caractérisé en ce que**
la fiche est conçue pour se brancher dans le premier connecteur RF (210, 230) d'un premier type de prise de courant; et
le trou (204) de la plaque d'adaptation est situé à une distance de la fiche (202) de telle sorte que lorsque la fiche est insérée dans ledit premier connecteur RF (210, 230), le trou (204) est relié avec le second connecteur RF (220, 240) du premier type de prise de courant.

2. Plaque d'adaptation selon la revendication 1, **caractérisé en ce que** la fiche comprend une première surface longitudinale (202a) destinée à se brancher dans un évidement (216) entre une broche (212) et une paroi circulaire (214) du premier connecteur.

3. Plaque d'adaptation selon la revendication 2, **caractérisé en ce que** la fiche comprend une seconde surface longitudinale (202b) opposée à la première surface longitudinale (202a) étant réalisée à l'inverse de la première surface longitudinale de telle sorte que lorsqu'elle est disposée sur le côté opposé d'une broche d'un premier connecteur RF d'un second type de prise de courant, le trou est relié avec un second connecteur RF du second type de prise de courant.

4. Plaque d'adaptation selon la revendication 3, **caractérisé en ce que** les première et seconde surfaces longitudinales ont des sections transversales supérieure et inférieure de forme convexe (502a, 502b ; 504a, 504b), les sections transversales supérieure et inférieure de forme convexe de la première ou de la seconde surface longitudinale étant disposées pour être en contact avec la paroi circulaire du premier connecteur.

5. Plaque d'adaptation selon la revendication 4, **caractérisé en ce que** les première et seconde surfaces longitudinales présentent une section transversale médiane de forme concave (502c ; 504c).

6. Plaque d'adaptation selon l'une quelconque des revendications précédentes, **caractérisé en ce que**
les premier et second connecteurs RF sont des connecteurs Belling-Lee (CEI 169-2), dans lequel le premier connecteur RF est destiné au signal radio FM et le second connecteur est destiné au moins au signal de télévision.

7. Plaque d'adaptation selon l'une quelconque des revendications 3 à 6, **caractérisé en ce que**
dans le premier type de prise de courant, une distance entre les broches du premier et du second connecteur RF est sensiblement de 25mm, de préférence de 25,4mm; et
dans le second type de prise de courant, une distance entre les broches du premier et du second connecteur RF est sensiblement de 30mm, de préférence de 30,0mm.

8. Plaque d'adaptation selon l'une quelconque des revendications précédentes, **caractérisé en ce que** la plaque d'adaptation comprend
des moyens pour relier la plaque d'adaptation au module CATV.

9. Module CATV adapté pour la fixation à une terminaison de prise de courant d'un câble coaxial, **caractérisé en ce que**
le module CATV comprend une plaque d'adaptation selon l'une quelconque des revendications 1 à 8.

10. Module CATV selon la revendication 9, **caractérisé en ce que** la plaque d'adaptation est fixée au module CATV comme une plaque arrière.

11. Module CATV selon la revendication 9 ou 10, **caractérisé en ce que** le module de CATV est un filtre et / ou un module de séparation, un câble modem, un amplificateur ou un équipement Ethernet sur câble coaxial.
